(19) **Europäisches Patentamt European Patent Office Office européen des brevets**

(11) **EP 4 595 635 B1**

(12) **EUROPEAN PATENT SPECIFICATION**

(45) Date of publication and mention of the grant of the patent:
**08.07.2026 Bulletin 2026/28**

(21) Application number: **22792819.9**

(22) Date of filing: **26.09.2022**

(51) International Patent Classification (IPC):
**H04W 72/0453** *(2023.01)* **H04W 72/40** *(2023.01)*
**H04W 72/02** *(2009.01)*

(52) Cooperative Patent Classification (CPC):
**H04W 72/0453; H04W 72/02; H04W 72/40**

(86) International application number:
**PCT/EP2022/076696**

(87) International publication number:
**WO 2024/067946 (04.04.2024 Gazette 2024/14)**

(54) **FREQUENCY RESOURCE DISTRIBUTION FOR CONTROL SIGNAL TRANSMISSION IN D2D COMMUNICATION BASED ON TWO RADIO TECHNOLOGIES**

FREQUENZRESSOURCENVERTEILUNG ZUR STEUERSIGNALÜBERTRAGUNG IN EINER D2D-KOMMUNIKATION AUF BASIS VON ZWEI FUNKTECHNOLOGIEN

DISTRIBUTION DE RESSOURCES DE FRÉQUENCE POUR UNE TRANSMISSION DE SIGNAL DE COMMANDE DANS UNE COMMUNICATION D2D SUR LA BASE DE DEUX TECHNOLOGIES RADIO

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**06.08.2025 Bulletin 2025/32**

(73) Proprietor: **Telefonaktiebolaget LM Ericsson (publ) 164 83 Stockholm (SE)**

(72) Inventors:
- **GERAMI, Majid 224 73 LUND (SE)**
- **BLASCO SERRANO, Ricardo 02260 ESPOO (FI)**

(74) Representative: **Ericsson Patent Development Torshamnsgatan 21-23 164 80 Stockholm (SE)**

(56) References cited:
**US-A1- 2022 086 700**

- FRAUNHOFER HHI ET AL: "Discussion on Co-Channel Coexistence for LTE and NR Sidelink", vol. RAN WG1, no. e-Meeting; 20220509 - 20220520, 29 April 2022 (2022-04-29), XP052153609, Retrieved from the Internet <URL:https://ftp.3gpp.org/tsg_ran/WG1_RL1/TSGR1_109-e/Docs/R1-2204609.zip R1-2204609_SL_CoChannelCoex.docx> [retrieved on 20220429]
- CATT ET AL: "Discussion on co-channel coexistence for LTE sidelink and NR sidelink", vol. RAN WG1, no. e-Meeting; 20220509 - 20220520, 29 April 2022 (2022-04-29), XP052152995, Retrieved from the Internet <URL:https://ftp.3gpp.org/tsg_ran/WG1_RL1/TSGR1_109-e/Docs/R1-2203463.zip R1-2203463.docx> [retrieved on 20220429]
- CAICT: "Considerations on co-channel coexistence for LTE SL and NR SL", vol. RAN WG1, no. e-Meeting; 20220509 - 20220520, 29 April 2022 (2022-04-29), XP052153605, Retrieved from the Internet <URL:https://ftp.3gpp.org/tsg_ran/WG1_RL1/TSGR1_109-e/Docs/R1-2204585.zip R1-2204585.docx> [retrieved on 20220429]

EP 4 595 635 B1

**Description**

Technical Field

The present invention relates to methods for controlling device-to-device (D2D) communication and to corresponding devices, systems, and computer programs.

Background

Current wireless communication networks, e.g., based on the 4G (4th Generation) LTE (Long Term Evolution) or 5G (5th Generation) NR technology as specified by 3GPP (3rd Generation Partnership Project), also support D2D communication modes to enable direct communication between UEs (user equipments), sometimes also referred to as sidelink (SL) communication. In SL communication and other types of D2D communication, a wireless transmission may be performed directly from a transmitter (TX) UE to a receiver (RX) UE. D2D communication modes may for example be used for vehicle communications, e.g., including communication between vehicles, between vehicles and roadside communication infrastructure and, possibly, between vehicles and cellular networks. Due to wide range of different types of devices that might be involved in the communication with the vehicles, vehicle-to-everything (V2X) communication is another term used to refer to this class of communication. Vehicle communications have the potential to increase traffic safety, reduce energy consumption and enable new services related to ITS (Intelligent Transportation System) applications.

SL communication may be used in addition or as an alternative to uplink (UL) and downlink (DL) transmissions in a cellular network. In 3GPP networks, The SL radio interface is sometimes also referred to as the PC5 interface, while the the UL/DL interface is sometimes referred to as the Uu interface. Both in the LTE technology and the NR technology, SL communication can be performed with and without network coverage and with varying degrees of interaction between the UEs and the network, including support for standalone, network-less operation.

In cellular networks, the network typically configures some parameters used by the UEs. This configuration is typically signaled by a network node, e.g., an access node, in the NR technology typically referred to as "gNB" and in the LTE technology typically referred to as "eNB". The configuration may be done using RRC (Radio Resource Control) signaling, by broadcasted system information, e.g., in an MIB (Master Information Block) or SIB (System Information Block), or some other type of signaling. Such network control may be used for SL communication while at least one of the communicating UEs is in coverage of a network. Further, the UEs may continue to use at least some of the configured parameters when they have moved out of network coverage. Further, parameters for controlling SL communication of UEs that are out of network coverage may be provided by means of a pre-configuration, e.g., by storing the parameters in a SIM (Subscriber Identity Module), in other operator settings, or in manufacturer settings. For some V2X applications, (pre-) configurations may also be defined by road authorities and stored by manufacturers of devices or chipsets. In such case, the (pre-)configuration would thus be provided already at the time of manufacture of the UE.

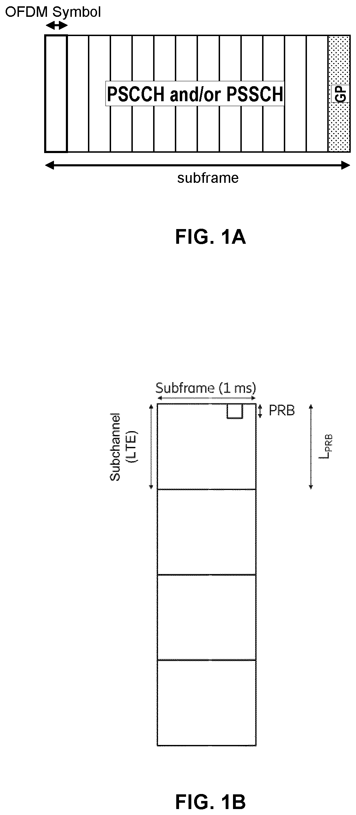

For SL operation based on the LTE technology, herein also denoted as LTE SL, SL transmissions are organized in subframes which consist of 14 OFDM (Orthogonal Frequency Division Multiplexing) symbols. The last OFDM symbol of the subframe is left unused, to act as a guard period (GP). The duration of the subframe is 1 ms. Fig. 1A schematically illustrates the subframe structure as used in LTE SL. As illustrated, the first 13 OFDM symbols are used for transmission of physical (PHY) channels, such as a PSCCH (Physical SL Control Channel) and/or of a PSSCH (Physical SL Shared Channel). In a typical configuration PSCCH and PSSCH are transmitted adjacent in frequency. Further, a subframe is divided into a first slot and a second slot in the time domain, each occupying 7 OFDM symbols.

In LTE SL, the radio resources are organized in terms of resource pools. An LTE resource pool is a group of time-frequency resources, herein also denoted as radio resources, that may be used for transmitting or receiving LTE SL transmissions. In the frequency domain, a resource pool is divided in one or several subchannels, with each subchannel corresponding to a group of consecutive physical resource blocks (PRBs). In the time domain, an LTE resource pool indicates subframes that are available for performing LTE SL transmissions. Fig. 1B illustrates an example of an LTE SL resource pool with $L_{subch} = 4$ subchannels, each of them consisting of $L_{RBs}$ PRBs. The subchannel constitutes the smallest frequency granularity of resource allocation for the PSCCH. As a result, in typical configuration a LTE SL transmission carrying PSCCH and PSSCH occupies an integer number of subchannels over one subframe, including the GP.

As regards the selection of radio resources from the resource pool, LTE SL supports two different modes of operation, denoted as Mode 3 and Mode 4. In the case of Mode 4, a TX UE autonomously selects the radio resources for the LTE SL transmission from the LTE resource pool. To avoid that multiple UEs select the same radio resources, Mode 4 defines a sensing procedure by which UEs can detect each other's transmissions. The sensing procedure is based on measurements of received signal strength indicator (RSSI), in the context of LTE SL transmissions also referred to as SL RSSI or S-RSSI. More specifically, the UE performs an RSSI measurement in each subchannel of each slot. When denoting the RSSI measurement corresponding to subframe y and sub-channel r as $RSSI_y^r$, determination whether a future radio resource, in subframe n and on subchannel r, is based on computation of the value $S_n^r$:

$$S_n^r = \frac{1}{K} \sum_{j=0}^{K} RSSI_{n-j*P_{step}}^r,$$ (1)

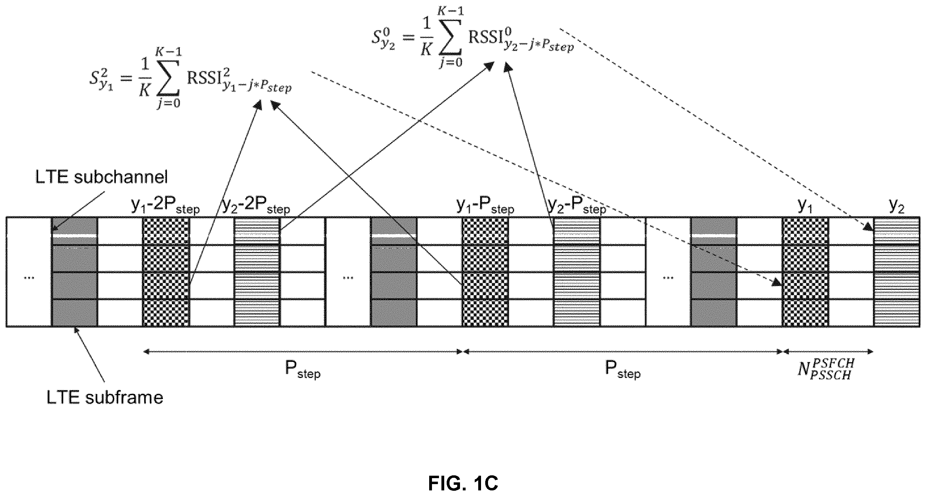

where $P_{step}$ denotes a step period. The computation is done for some values of $K$ and $P_{step}$. As a result, the UE computes the average RSSI value in subchannel r in K subframes, spaced at equal intervals of length $P_{step}$. An example of such computation is illustrated in Fig. 1C. The aim is to select only resources with low $S_n^r$, because if another UE is transmitting periodically with period $P_{step}$ or a multiple thereof, this will result in a high value of $S_n^r$. In this respect, it should also be noted that in the computation according to (1), the values in the summation are computed for a given subchannel r.

For SL operation based on the NR technology, herein also denoted as NR SL, NR SL transmissions are organized in slots which each consist of 14 OFDM symbols. Similar to LTE SL, the last OFDM symbol is left unused, to act as a GP. The duration of a slot is configurable and depends on subcarrier spacing. In the following, it is assumed that the subcarrier spacing for NR SL is 15 kHz, resulting in a slot duration of 1 ms, which is the same as the duration of a subframe in LTE SL. It is however noted that the explanations provided herein also apply to other values of subcarrier spacing. In NR SL, the slots may be used for transmission of an PSCCH and/or PSSCH. In addition, NR SL also defines a PSFCH (Physical SL Feedback Channel). The PSFCH may be used for transmitting HARQ (Hybrid Automatic Repeat Request) acknowledgement information from the RX UE to the TX UE. Further, it is possible to configure PSFCH resources for PSFCH transmission of conflict information, as for example specified in 3GPP TS 38.213 V17.3.0 (2022-09). Here, it is to be noted that different PSFCH resources are configured for each purpose.

Also in the case of NR SL, the radio resources are organized in terms of resource pools. An NR resource pool is a group of time-frequency resources, i.e., radio resources, that may be used for transmitting or receiving NR SL transmissions. In the frequency domain, an NR resource pool includes one or more subchannels. A subchannel is a group of consecutive PRBs. In the time domain, a resource pool indicates which slots are available for performing NR sidelink transmissions. Also in NR SL, the subchannel constitutes the smallest frequency granularity of resource allocation for the PSCCH. As a result, in typical configurations an NR SL transmission carrying PSCCH and PSSCH occupies an integer number of subchannels of a slot. The actual duration of the PSCCH and PSSCH depends on the slot in which it is transmitted. The resource pool configuration defines two types of slots: slots without PSFCH resources and slots with PSFCH resources.

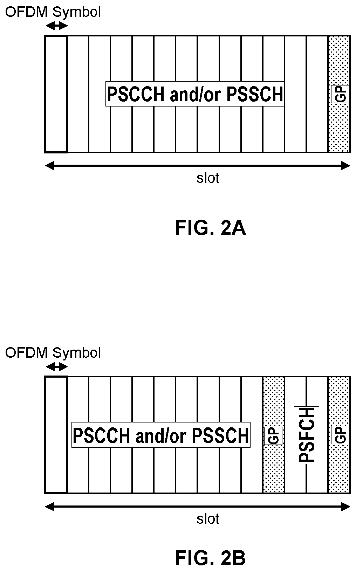

In slots without PSFCH resources, the PSCCH and PSSCH occupy all OFDM symbols of the slot except the last OFDM symbol, which acts GP. Fig. 2A illustrates an example of such slot configuration. In slots with PSFCH resources, the PSCCH and PSSCH transmission spans less OFDM symbols, with some OFDM symbols at the end of the slot being used for transmitting the PSFCH and for an additional GP. Fig. 2B illustrates an example of such slot configuration. Here, it should be noted that in slots with PSFCH resources, the PSCCH and PSSCH may originate from one UE while the PSFCH may originate from another UE. The presence of PSFCH resources in the slots is configurable, and details concerning such configurability are for example specified in 3GPP TS 38.213 V17.3.0. In the time domain, PSFCH resources may be configured to appear every slot, every second slot, or every fourth slot. In the frequency domain, the configuration may determine for each PRB whether it can be used for PSFCH transmission or not. Among the multiple configured PSFCH resources, the RX UE selects one resource for transmitting the PSFCH based on the resource carrying the PSCCH or PSSCH and some physical layer identities.

It can be expected that NR SL will not totally replace LTE SL, but that the two technologies will coexist and also be supported in parallel on the same device. For example, some services may use LTE SL while other services use NR SL. For example, for V2X a service denoted as "ITS safety" will use LTE SL, and a service type denoted as "Cooperative driving" will use NR SL. In view of scarcity of available frequency spectrum, it may also be necessary to deploy NR SL and LTE SL on the same or at least overlapping time-frequency resources, sometimes also denoted as co-channel deployment.

A problem that may occur in the case of co-channel deployment of LTE SL and NR SL is misalignment of transmissions. It is generally desirable that in every transmission interval, e.g., in an LTE subframe, all transmissions start at the same time and end at the same time. This can be illustrated by considering the following examples: In a first example, when considering three UEs, denoted UE1, UE2, and UE3, UE1 and UE2 may start SL transmissions to UE3 at the same time. If UE1 is closer to UE3 than UE2, the signal transmitted by UE1 arrives with much higher power at UE3 than the signal transmitted by UE2. The receiver of UE3 may then tunes its amplifiers and automatic gain control (AGC) loops to deal with this difference in received powers so that it can process both signals. In a second example, a similar setting is assumed, but with UE2 starting its SL transmission earlier than UE1. If the SL transmission from UE2 is received by UE3, UE3 tunes its amplifiers and AGC loops based on the received signal power, which is relatively low. If then UE1 starts its SL transmission, the received power at UE3 becomes very high while the receiver of UE3 is tuned to process low power signals. This may result in saturation of the amplifiers and AGC loops, and it may take up to an OFDM symbol for UE3 to recalibrate its AGC. Channel estimation and demodulation may be disturbed for even longer time. The disturbance may affect also subchannels which are not used by the transmission from UE1. This is due to the fact in practical implementations that the amplifiers and AGC loop are found before the OFDM demodulator, which is the function that allows for separating signals in frequency.

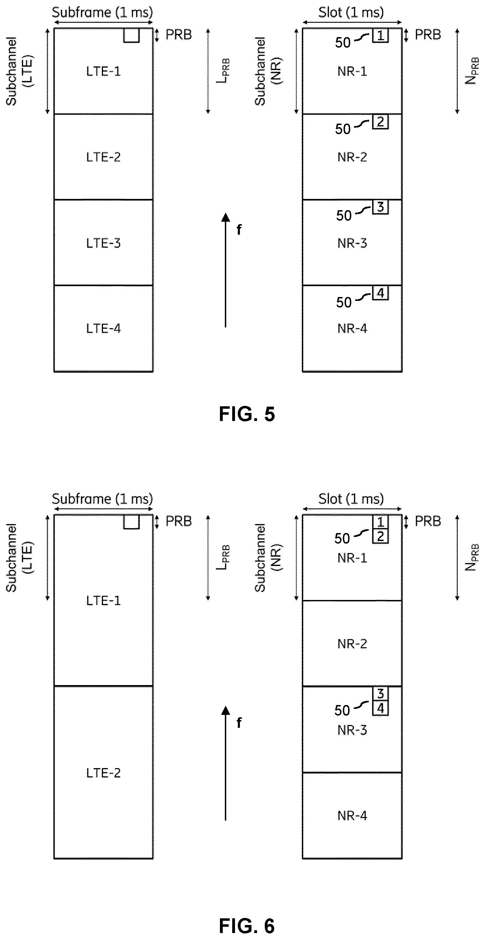

As can be seen from the above examples, from the perspective of an RX UE using LTE SL, large variations in received power are not desirable. This can be partially addressed by using the same NR slot and LTE subframe duration and aligning the NR slots and the LTE subframes. However, in the case of slots with PSFCH resources like illustrated in Fig. 5, the transmission of the PSFCH by another UE may still result in problems similar to the above second example: At the RX UE the amplifiers and AGC loops are tuned to receive the PSCCH and PSSCH from the TX UE, and then transmission on the PSFCH by another UE may result in excessive received power at the RX UE, saturating the amplifiers and AGC loops. In other words, NR PSFCH transmissions may disturb the reception of signals by LTE UEs. Similar problems may be caused not only by the NR PSFCH, but also by other control signals that can result in sudden variations of received power at the RX UE, e.g., because the control signal is transmitted by another UE than the TX UE currently transmitting to the RX UE, and/or because the control signal is transmitted with higher power than regular transmissions of PSCCH or PSFCH. Such problems may be even more severe if two radio technologies for D2D communication coexist in the same device, e.g., if the RX UE is an LTE UE which and part of the same device with an NR UE which transmits the PSFCH.

US 2022/086700 A1 provides methods, apparatuses, and computer program products to facilitate coexistence of a first radio access technology (RAT) and a second RAT. An example method of a first wireless device operating based on a RAT includes receiving a sidelink resource reservation from a second wireless device based on a second RAT, the sidelink resource reservation indicating a first set of resources. The example method further includes determining whether to exclude, from a candidate resource set for the first RAT within a sidelink resource pool for the first RAT, resources that overlap with the set of reserved resources for the second RAT. The example method further includes transmitting a sidelink transmission using one or more sidelink transmission resources selected from the candidate resource set in the sidelink resource pool for the first RAT.

3GPP Draft R1-2204609 "Discussion on Co-Channel Coexistence for LTE and NR Sidelink" focuses on the changes required for enabling the co-channel coexistence between LTE and NR sidelink, taking into account the work done on the topic in Rel-16 and on spectrum sharing by ETSI. An Option 1 is included, wherein resource pools for LTE and NR V2X are defined in the same time slots but across different sub-channels. An Option 2 defines resource pools in non-orthogonal time slots, but within the same sub-channels.

3GPP Draft R1-2203463 "Discussion on co-channel coexistence for LTE sidelink and NR sidelink" discloses other similar resource pool configurations enabling co-Channel Coexistence for LTE and NR Sidelink, including: TDM based semi-static resource pool partition with an Option 1, wherein two separate resource pools that do not overlap in time domain are (pre)-configured for LTE sidelink and NR sidelink, and an Option 2, wherein one resource pool is divided into different non-overlapping time resources, which are used by LTE sidelink and NR sidelink separately; and FDM based semi-static resource pool partition, wherein two separate resource pools that do not overlap in frequency domain are (pre) configured for LTE sidelink and NR sidelink if their sub-carrier spacing is the same.

3GPP Draft R1-2204585 " Considerations on co-channel coexistence for LTE SL and NR SL" relates to LTE SL and NR SL co-channel coexistence, which may occur at three levels, one of them defining that LTE SL and NR SL can coexist in same carrier, separate resource pools in frequency domain, same subframe in time domain (Levelt). It is proposed that configurations in the co-channel coexistence resource pools, including the configurations of subchannel and SGS for NR SL should be for further study. It is also mentioned that, if NR SL and LTE SL coexist in same resource pool, the subframes configured with PSFCH for NR SL may be occupied by LTE SL and then it causes negative impact to the HARQ feedback for related NR PSSCHs.

Accordingly, there is a need for techniques which allow for efficiently managing coexistence of D2D transmissions based on different radio technologies.

<u>Summary</u>

According to an embodiment, a method of controlling D2D communication is provided. According to the method, a D2D communication device performs D2D communication based on a first radio technology on first radio resources from a first resource pool comprising a first set of frequency subchannels. Selection of the first radio resources from the first resource pool is based on sensing the frequency subchannels of the first set to detect transmissions by other devices. Further, the D2D communication device performs D2D communication based on a second radio technology on second radio resources from a second resource pool comprising a second set of frequency subchannels. The D2D communication based on the second radio technology comprises transmission of at least one control signal. The second set of frequency subchannels at least in part overlaps with the first set of frequency subchannels. Frequency resources for transmission of the at least one control signal are distributed in frequency depending on the first set of frequency subchannels, such that each frequency subchannel of the first set includes at least one frequency resource for transmission of the at least one control signal.

According to a further embodiment, a method of controlling D2D communication is provided. The method comprises configuring at least one D2D communication device with a first resource pool for selection of first radio resources for D2D communication based on a first radio technology and a second resource pool for selection of second radio resources for D2D communication based on a second radio technology. The first resource pool comprises a first set of frequency subchannels and the second resource pool comprises a second set of frequency subchannels. The second set of frequency subchannels at least in part overlaps with the first set of frequency subchannels. Selection of the first radio resources from the first resource pool is based on sensing the frequency subchannels of the first set to detect transmissions by other devices. Frequency resources for transmission of at least one control signal of the second radio technology are distributed in frequency depending on the first set of frequency subchannels, such that each frequency subchannel of the first set includes at least one frequency resource for transmission of the at least one control signal.

According to a further embodiment, a D2D communication device is provided. The D2D communication device is adapted to perform D2D communication based on a first radio technology on first radio resources from a first resource pool comprising a first set of frequency subchannels. Selection of the first radio resources from the first resource pool is based on sensing the frequency subchannels of the first set to detect transmissions by other devices. Further, the D2D communication device is adapted to perform D2D communication based on a second radio technology on second radio resources from a second resource pool comprising a second set of frequency subchannels. The D2D communication based on the second radio technology comprises transmission of at least one control signal. The second set of frequency subchannels at least in part overlaps with the first set of frequency subchannels. Frequency resources for transmission of the at least one control signal are distributed in frequency depending on the first set of frequency subchannels, such that each frequency subchannel of the first set includes at least one frequency resource for transmission of the at least one control signal.

According to a further embodiment, a D2D communication device is provided. The D2D communication device comprises at least one processor and a memory. The memory contains instructions executable by said at least one processor, whereby the D2D communication device is operative to perform D2D communication based on a first radio technology on first radio resources from a first resource pool comprising a first set of frequency subchannels. Selection of the first radio resources from the first resource pool is based on sensing the frequency subchannels of the first set to detect transmissions by other devices. Further, the memory contains instructions executable by said at least one processor, whereby the D2D communication device is operative to perform D2D communication based on a second radio technology on second radio resources from a second resource pool comprising a second set of frequency subchannels. The D2D communication based on the second radio technology comprises transmission of at least one control signal. The second set of frequency subchannels at least in part overlaps with the first set of frequency subchannels. Frequency resources for transmission of the at least one control signal are distributed in frequency depending on the first set of frequency subchannels, such that each frequency subchannel of the first set includes at least one frequency resource for transmission of the at least one control signal.

According to a further embodiment, an apparatus for configuration of D2D communication is provided. The apparatus is adapted to configure at least one D2D communication device with a first resource pool for selection of first radio resources for D2D communication based on a first radio technology and a second resource pool for selection of second radio resources for D2D communication based on a second radio technology. The first resource pool comprises a first set of frequency subchannels and the second resource pool comprises a second set of frequency subchannels. The second set of frequency subchannels at least in part overlaps with the first set of frequency subchannels. Selection of the first radio resources from the first resource pool is based on sensing the frequency subchannels of the first set to detect transmissions by other devices. Frequency resources for transmission of at least one control signal of the second radio technology are distributed in frequency depending on the first set of frequency subchannels, such that each frequency subchannel of the first set includes at least one frequency resource for transmission of the at least one control signal.

According to a further embodiment, an apparatus for configuration of D2D communication is provided. The apparatus comprises at least one processor and a memory. The memory contains instructions executable by said at least one processor, whereby the apparatus is operative to configure at least one D2D communication device with a first resource pool for selection of first radio resources for D2D communication based on a first radio technology and a second resource pool for selection of second radio resources for D2D communication based on a second radio technology. The first resource pool comprises a first set of frequency subchannels and the second resource pool comprises a second set of frequency subchannels. The second set of frequency subchannels at least in part overlaps with the first set of frequency subchannels. Selection of the first radio resources from the first set to detect transmissions by other devices. Frequency resources for transmission of at least one control signal of the second radio technology are distributed in frequency depending on the first set of frequency subchannels, such that each frequency subchannel of the first set includes at least one frequency resource for transmission of the at least one control signal.

According to a further embodiment of the invention, a computer program or computer program product is provided, e.g., in the form of a non-transitory storage medium, which comprises program code to be executed by at least one processor of a D2D communication device. Execution of the program code causes the D2D communication device to perform D2D communication based on a first radio technology on first radio resources from a first resource pool comprising a first set of frequency subchannels. Selection of the first radio resources from the first resource pool is based on sensing the frequency subchannels of the first set to detect transmissions by other devices. Further, execution of the program code causes the D2D communication device to perform D2D communication based on a second radio technology on second radio resources from a second resource pool comprising a second set of frequency subchannels. The D2D communication based on the second radio technology comprises transmission of at least one control signal. The second set of frequency subchannels at least in part overlaps with the first set of frequency subchannels. Frequency resources for transmission of the at least one control signal are distributed in frequency depending on the first set of frequency subchannels, such that each frequency subchannel of the first set includes at least one frequency resource for transmission of the at least one control signal.

According to a further embodiment of the invention, a computer program or computer program product is provided, e.g., in the form of a non-transitory storage medium, which comprises program code to be executed by at least one processor of an apparatus for configuration of D2D communication. Execution of the program code causes the apparatus to configure at least one D2D communication device with a first resource pool for selection of first radio resources for D2D communication based on a first radio technology and a second resource pool for selection of second radio resources for D2D communication based on a second radio technology. The first resource pool comprises a first set of frequency subchannels and the second resource pool comprises a second set of frequency subchannels. The second set of frequency subchannels at least in part overlaps with the first set of frequency subchannels. Selection of the first radio resources from the first resource pool is based on sensing the frequency subchannels of the first set to detect transmissions by other devices. Frequency resources for transmission of at least one control signal of the second radio technology are distributed in frequency depending on the first set of frequency subchannels, such that each frequency subchannel of the first set includes at least one frequency resource for transmission of the at least one control signal.

Details of such embodiments and further embodiments will be apparent from the following detailed description of embodiments.

Brief Description of the Drawings

Fig. 1A schematically illustrates an example of an LTE SL subframe.

Fig. 1B schematically illustrates an example of an LTE SL resource pool.

Fig. 1C schematically illustrates an example of Mode 4 sensing in LTE SL.

Fig. 2A schematically illustrates an example of an NR SL slot without PSFCH resources.

Fig. 2B schematically illustrates an example of an NR SL slot with PSFCH resources.

Fig. 3 schematically illustrates an exemplary V2X scenario in which D2D communication may be controlled according to an embodiment.

Fig. 4 schematically illustrates an exemplary scenario according to an embodiment of the invention, in which D2D communication may be controlled according to an embodiment.

Fig. 5 schematically illustrates an example of resource pool configurations according to an embodiment.

Fig. 6 schematically illustrates a further example of resource pool configurations according to an embodiment.

Fig. 7 schematically illustrates a further example of resource pool configurations according to an embodiment.

Fig. 8 schematically illustrates a further example of resource pool configurations according to an embodiment.

Fig. 9 schematically illustrates a further example of resource pool configurations according to an embodiment.

Fig. 10 shows a flowchart for schematically illustrating a method according to an embodiment.

Fig. 11 shows a flowchart for schematically illustrating a further method according to an embodiment.

Fig. 12 schematically illustrates structures of a D2D communication device according to an embodiment.

Fig. 13 schematically illustrates structures of an apparatus according to an embodiment.

Detailed Description of Embodiments

In the following, concepts in accordance with exemplary embodiments of the invention will be explained in more detail and with reference to the accompanying drawings. The illustrated embodiments relate to controlling of D2D communication by wireless communication devices. These wireless communication devices may include various types of UEs or other wireless devices (WDs). As used herein, the term "wireless device" (WD) refers to a device capable, configured, arranged, and/or operable to communicate wirelessly with network nodes and/or other WDs. Unless otherwise noted, the term WD may be used interchangeably herein with UE. Communicating wirelessly may involve transmitting and/or receiving wireless signals using electromagnetic waves, radio waves, infrared waves, and/or other types of signals suitable for conveying information through air. In some embodiments, a WD may be configured to transmit and/or receive information without direct human interaction. For instance, a WD may be designed to transmit information to a network on a predetermined schedule, when triggered by an internal or external event, or in response to requests from the network. Examples of a WD include, but are not limited to, a smart phone, a mobile phone, a cell phone, a Voice over IP (VoIP) phone, a wireless local loop phone, a desktop computer, a Personal Digital Assistant (PDA), a wireless camera, a gaming console or device, a music storage device, a playback appliance, a wearable terminal device, a wireless endpoint, a mobile station, a tablet, a laptop, Laptop Embedded Equipment (LEE), Laptop Mounted Equipment (LME), a smart device, a wireless Customer Premise Equipment (CPE), a vehicle mounted wireless terminal device, a connected vehicle, etc. In some examples, in an Internet of Things (IoT) scenario, a WD may also represent a machine or other device that performs monitoring and/or measurements and transmits the results of such monitoring and/or measurements to another WD and/or a network node. The WD may in this case be a Machine-to-Machine (M2M) device, which may in a 3GPP context be referred to as a Machine-Type Communication (MTC) device. As one particular example, the WD may be a UE implementing the 3GPP Narrowband IoT (NB-IoT) standard. Particular examples of such machines or devices are sensors, metering devices such as power meters, industrial machinery, home or personal appliances (e.g., refrigerators, televisions, etc.), or personal wearables (e.g., watches, fitness trackers, etc.). In other scenarios, a WD may represent a vehicle or other equipment that is capable of monitoring and/or reporting on its operational status or other functions associated with its operation. A WD as described above may represent the endpoint of a wireless connection, in which case the device may be referred to as a wireless terminal. Furthermore, a WD as described above may be mobile, in which case it may also be referred to as a mobile device or a mobile terminal. The illustrated concepts particularly concern WDs that support D2D communication, for example by implementing a 3GPP standard for SL communication, Vehicle-to-Vehicle (V2V), Vehicle-to-Infrastructure (V2I), Vehicle-to-Everything (V2X). The wireless communication devices including one or more WDs supporting D2D communication are herein also referred to as D2D communication devices. The D2D communication may for example be based on the LTE radio technology or the NR radio technology as specified by 3GPP, e.g., on the PC5 SL interface of the LTE or NR technology. However, it is noted that the illustrated concepts could also be applied to other radio technologies, e.g., a WLAN (Wireless Local Area Network) technology.

In the illustrated concepts, D2D communication is performed based on different radio technologies. These radio technologies may specifically correspond to the LTE SL technology using sensing-based resource selection in Mode 4 and to the NR SL technology, which involves transmission of feedback on PFSCH resources. It is however noted that the illustrated concepts could also be applied to other combinations of radio technologies, where the transmission of a control signal of one of the technologies may adversely affect sensing of radio resources in the other radio technology.

In the illustrated concepts, one or more D2D communication devices are configured with a first resource pool and a second resource pool. The first pool is used for selection of first radio resources for D2D communication based on a first radio technology, e.g., LTE SL, and the second resource pool is used for selection of second radio resources for D2D communication based on a second radio technology, NR SL. The first and second resource pool may be configured in the same device, e.g., in a device which supports both LTE SL and NR SL. Further, some one or more devices could be configured with the first resource pool, while one or more other devices could be configured with the second resource pool. The first resource pool includes a first set of frequency subchannels and the second resource pool includes a second set of frequency subchannels. The second set of frequency subchannels at least in part overlaps with the first set of frequency subchannels. Selection of the first radio resources from the first resource pool is based on sensing the frequency subchannels of the first set to detect transmissions by other devices, e.g., like in Mode 4 of LTE SL. Frequency resources for transmission of at least one control signal of the second radio technology, e.g., a PSFCH, are distributed in frequency depending on the first set of frequency subchannels, such that each frequency subchannel of the first set includes at least one frequency resource for transmission of the at least one control signal.

As mentioned above, the illustrated concepts may be applied to devices that support both LTE SL an NR SL. In such devices, a single chipset could implement the functionalities of both LTE SL and NR SL. Alternatively such device could include two separate chipsets, one for LTE SL and the other for NR SL. In each case, the device could for example be an on-board communications module of a vehicle, e.g., car, or a vehicle supporting V2X communication.

When applied in the context of LTE SL and NR SL, the illustrated concepts allow for configuring an NR resource pool, to be used for NR SL transmissions, and an LTE resource pool, to be used for LTE SL transmissions, in such a way that NR PSFCH transmissions are on average appearing on all subchannels of the LTE resource pool. As a result, the PSFCH transmissions will be taken into account in the sensing used in LTE SL, and the resource selection mechanism will avoid selecting using those radio resources for LTE SL transmissions that could be adversely affected by PSFCH transmissions.

The illustrated concepts may involve providing separate but dependent configurations for LTE SL and NR SL, in particular concerning the resource pools. These configurations can be provided by the network or can be pre-configured, e.g., based on operator settings or manufacturer settings. The configurations for LTE SL and NR SL could be provided separately, as long as the required dependency of the configuration parameters is fulfilled. Concerning V2X services, the configurations could also at least in part be defined by a traffic authority which is responsible for a country or region. The traffic authority could for example defines a set of parameter values for LTE SL and a set of parameter values for NR SL, taking into account the dependency defined by the illustrated concepts. The manufacturers or distributors of manufacturers use these parameter values in their products for the country or region. As mentioned above, such products may be a chipset, a vehicle communications module, a vehicle, e.g., car or motorcycle, or the like.

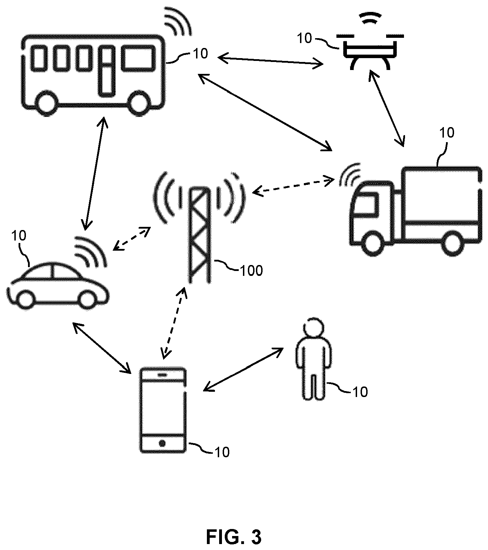

Fig. 3 illustrates an exemplary scenario involving V2X communications. In particular, Fig. 3 shows various D2D communication devices 10, which may engage in V2X communication or other D2D communication, illustrated by solid arrows. Further, Fig. 3 shows an access node 100 of a wireless communication network, e.g., an eNB of the LTE technology or a gNB of the NR technology. At least some of the D2D communication devices 10 may also be capable of communicating by using DL radio transmissions and/or UL radio transmissions, illustrated by broken arrows. Each of the D2D communication devices 10 may correspond to or include one or more UEs, in particular an LTE UE and an NR UE. At least some of the D2D communication devices 10 may include both an LTE UE and an NR UE.

The D2D communication devices 10 illustrated in Fig. 3 comprise vehicles, a drone, a mobile phone, and a person, e.g., a pedestrian, a cyclist, a driver of a vehicle, or a passenger of a vehicle. Here, it is noted that in the case of the vehicles the radio transmissions may be performed by a communication module installed in the vehicle, and that in the case of the person the radio transmissions may be performed by a radio device carried or worn by the person, e.g., a wristband device or similar wearable device. Furthermore, it is noted that the UEs shown in Fig. 3 are merely exemplary and that in the illustrated concepts other types of V2X communication device or D2D communication device could be utilized as well, e.g., RSUs (roadside units) or other infrastructure based V2X communication devices, V2X communication devices based in an aircraft, like an airplane, or helicopter, in a spacecraft, in a train or car of a train, in a ship, in a motorcycles, in a bicycle, in a mobility scooter, or in any other kind of mobility or transportation device. The V2X communication may also involve utilizing the illustrated mechanisms and procedures to enable DRX operation for the V2X communication between the D2D communication devices 10, thereby improving energy efficiency of the V2X communication.

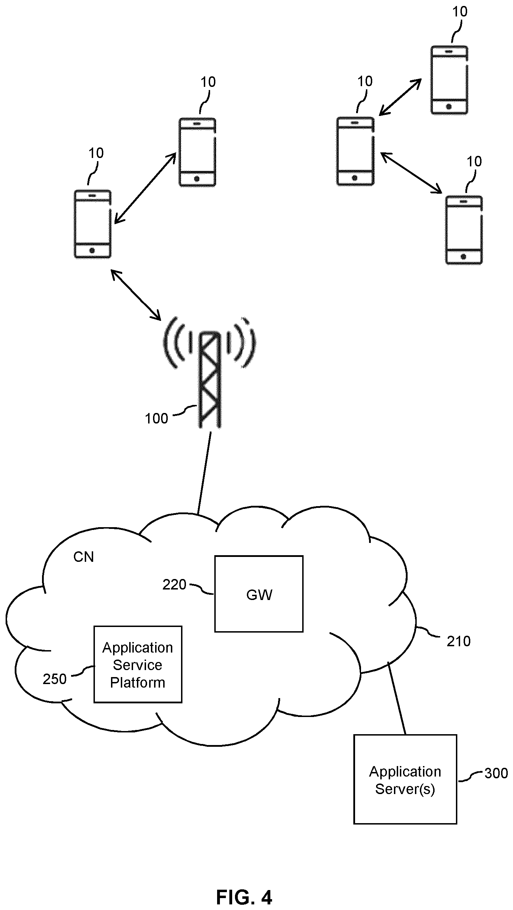

Fig. 4 illustrates an exemplary D2D communication scenario. In particular, Fig. 4 shows multiple D2D communication devices 10, which are connected to each other by radio links implementing direct wireless links (illustrated by double-headed arrows). Further, one of the D2D communication devices 10 is connected by a radio link to an access node 100 of a wireless communication network, e.g., to an eNB of the LTE technology, or a gNB of the NR technology. The access node 100 is part of a RAN (Radio Access Network) of the wireless communication network, which typically also includes further access nodes to provide a desired coverage of the wireless communication network. Further, Fig. 4 shows a core network (CN) 210 of the wireless communication network. The CN 210 may provide connectivity of the D2D communication devices 10 to other data networks, e.g., through a GW 220 provided in the CN 210. Further, the CN 210 may also include various nodes for controlling operation of the D2D communication devices 10. Also in this scenario, each of the D2D communication devices 10 may correspond to or include one or more UEs, in particular an LTE UE and an NR UE. At least some of the D2D communication devices 10 may include both an LTE UE and an NR UE.

The radio links may be used for D2D communication between the D2D communication devices 10. Further, the radio link to the wireless communication network may be used for controlling or otherwise assisting the D2D communication. Further, the D2D communication and/or data communication with the wireless communication network may be used for providing various kinds of services to the D2D communication devices 10, e.g., a voice service, a multimedia service, a data service, an ITS service or similar vehicular management or coordination service, an NSPS service, and/or an NCIS service. Such services may be based on applications which are executed on the D2D communication device 10 and/or on a device linked to the D2D communication device 10. Accordingly, in the illustrated concepts a D2D transmission may convey or correspond to a V2X message, an ITS message, or some other kind of message related to a service. Further, Fig. 4 illustrates an application service platform 250 in the CN 210 of the wireless communication network. Further, Fig. 4 illustrates one or more application servers 300 provided outside the wireless communication network. The application(s) executed on the D2D communication device 10 and/or on one or more other devices linked to the D2D communication device 10 may use the radio links with one or more other D2D communication devices 10, the application service platform 250, and/or the application server(s) 300, thereby enabling the corresponding service(s) on the D2D communication device 10. In some scenarios, the services utilized by the D2D communication devices 10 may thus be hosted on the network side, e.g., on the application service platform 250 or on the application server(s) 300. However, some of the services may also network-independent so that they can be utilized without requiring an active data connection to the wireless communication network. This may for example apply to certain V2X services or NSPS (National Security and Public Safety) services. Such services may be used in out-of-coverage situations, but could still be assisted from the network side while the D2D communication device 10 is in coverage of the wireless communication network, e.g., by configuring the D2D communication devices 10 with respect to the usage of the services. The application service platform 250 and the server(s) 300 may also be regarded as host computer which hosts a service provided by an application executed on the D2D communication device 10 and utilizes DL transmissions, UL transmissions, and/or D2D transmissions. Also in the scenario of Fig. 4, the D2D communication devices 10 may apply the DRX operation to the D2D communication to improve energy efficiency.

In the example of Fig. 4, the D2D communication devices 10 are assumed to be a mobile phone and vehicles or vehicle-based communication devices, e.g., a vehicle-mounted or vehicle-integrated communication module, or a smartphone or other user device linked to vehicle systems. However, it is noted that other types of UE could be used as well, e.g., a device carried by a pedestrian, or an infrastructure-based device, such as a roadside unit, like for example illustrated in Fig. 3.

As mentioned above, in the illustrated concepts for one or more of the D2D communication devices 10 the configuration for LTE SL transmissions, herein also denoted as LTE SL configuration, and the configuration for NR SL transmissions, herein also denoted as NR SL configuration, may be defined in a dependent manner. In the following explanations, it is assumed that the LTE SL configuration defines an LTE resource pool with $L_{subch,LTE}$ LTE subchannels, each of them consisting **of** $L_{PRBs}$ PRBs, and that the NR SL configuration defines an NR resource pool with $N_{subch,NR}$ NR subchannels, each of them consisting **of** $N_{PRBs}$ PRBs. The NR SL configuration further defines a set of $M_{\mathrm{PRB,set}}^{\mathrm{PSFCH}}$ PRBs for transmission of the PSFCH, with the number of the PRBs for transmission of the being denoted *by* $N_{RBs}$. The PRBs for transmission of the PSFCH are also denoted as PSFCH resources. The dependency of the two configurations may be expressed by the requirement that in the frequency resources corresponding to each of the LTE subchannels, there is at least one PSFCH resource, i.e., at least one PRB for transmission of the PSFCH. Figs. 5 to 9 illustrate examples of configurations in which this requirement is met.

In the example of Fig. 5, the LTE resource pool consists of $L_{subch,LTE}$ = 4 LTE subchannels, denoted by LTE-1, LTE-2, LTE-3, and LTE-4. The NR resource pool consists of $L_{subch,NR}$ = 4 NR subchannels, denoted by NR-1, NR-2, NR-3, and NR-4, and PSFCH resources 50. The PSFCH resources 50 are denoted by indices 1, 2, 3, 4 which indicate the NR subchannel they are associated with, i.e., the PSFCH resource 50 with index 1 is associated with NR subchannel NR-1, the PSFCH resource 50 with index 2 is associated with NR subchannel NR-2, the PSFCH resource 50 with index 3 is associated with NR subchannel NR-3, and the PSFCH resource 50 with index 4 is associated with NR subchannel NR-4. In this example, the LTE subchannels and the NR subchannels have the same width and are aligned in frequency f. As can be seen, for each of the LTE subchannels LTE-1, LTE-2, LTE-3, LTE-4 there is an overlapping one of the NR subchannels NR-1, NR-2, NR-3, NR-4 that has an associated PSFCH resource 50 in frequency resources that overlap with the frequency resources of the LTE subchannel. In the example of Fig. 5, the number of the LTE subchannels and the number of the NR subchannels are the same, and the number of PRBs per subchannel is the same for the LTE subchannels and the NR subchannels.

In the example of Fig. 6, the LTE resource pool consists of $L_{subch,LTE}$ = 2 LTE subchannels, denoted by LTE-1 and LTE-2. The NR resource pool consists $L_{subch,NR}$ = 4 NR subchannels, denoted by NR-1, NR-2, NR-3, and NR-4, and PSFCH resources 50. The PSFCH resources 50 are denoted by indices 1, 2, 3, 4 which indicate the NR subchannel they are associated with, i.e., the PSFCH resource 50 with index 1 is associated with NR subchannel NR-1, the PSFCH resource 50 with index 2 is associated with NR subchannel NR-2, the PSFCH resource 50 with index 3 is associated with NR subchannel NR-3, and the PSFCH resource 50 with index 4 is associated with NR subchannel NR-4. In this example, the LTE subchannels and the NR subchannels have different width and are only partly aligned in frequency f, as the upper frequency limit of NR-1 coincides with the upper frequency limit of LTE-1, the lower frequency limit of NR-2 coincides with the lower frequency limit of LTE-1, the upper frequency limit of NR-3 coincides with the upper frequency limit of LTE-2, and the lower frequency limit of NR-4 coincides with the lower frequency limit of LTE-2 . As can be seen, for each of the LTE subchannels LTE-1, LTE-2 there is an overlapping one of the NR subchannels NR-1, NR-2, NR-3, NR-4 that has an associated PSFCH resource 50 in frequency resources that overlap with the frequency resources of the LTE subchannel.

In this example, the number of the LTE subchannels and the number of the NR subchannels are different, and the number of PRBs per subchannel differs between the LTE subchannels and the NR subchannels. The PSFCH resources 50 are not configured in each of the NR-subchannels. Rather, NR-1 includes the PSFCH resources 50 for both NR-1 and NR-2, and NR-3 includes the PSFCH resources 50 for both NR-3 and NR-4. The latter may allow for avoiding frequency fragmentation of the NR-subchannels to some degree.

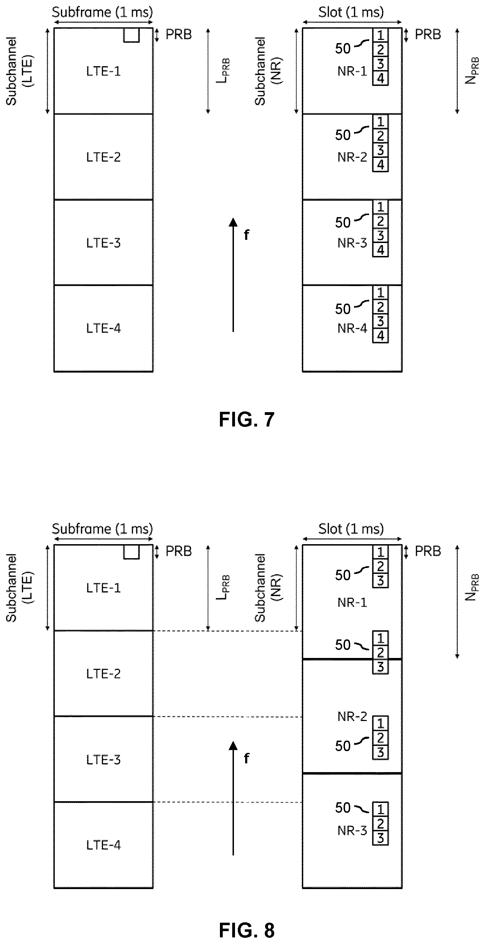

In the example of Fig. 7, the LTE resource pool consists of $L_{subch,LTE}$ = 4 LTE subchannels, denoted by LTE-1, LTE-2, LTE-3, and LTE-4. The NR resource pool consists of $L_{subch,NR}$ = 4 NR subchannels, denoted by NR-1, NR-2, NR-3, and NR-4, and PSFCH resources 50. The PSFCH resources 50 are denoted by indices 1, 2, 3, 4 which indicate the NR subchannel they are associated with, i.e., the PSFCH resources 50 with index 1 are associated with NR subchannel NR-1, the PSFCH resources 50 with index 2 are associated with NR subchannel NR-2, the PSFCH resources 50 with index 3 are associated with NR subchannel NR-3, and the PSFCH resources 50 with index 4 are associated with NR subchannel NR-4. As can be seem, in the frequency resources corresponding to each of the LTE subchannels, the NR SL resource pool configuration defines that there is at least one PSFCH resource associated with each of the NR subchannels. Specifically, in the frequency resources of LTE-1, there is a PSFCH resource 50 associated with NR-1, a PSFCH resource 50 associated with NR-2, a PSFCH resource 50 associated with NR-3, and a PSFCH resource 50 associated with NR-4. Similarly, in the frequency resources of each of LTE-2, LTE-3, and LTE-4, there is a PSFCH resource 50 associated with NR-1, a PSFCH resource 50 associated with NR-2, a PSFCH resource 50 associated with NR-3, and a PSFCH resource 50 associated with NR-4. In the example of Fig. 7, the number of the LTE subchannels and the number of the NR subchannels are the same, and the number of PRBs per subchannel is the same for the LTE subchannels and the NR subchannels. However, other configurations which provide that in the frequency resources corresponding to each of the LTE subchannels, the NR SL resource pool configuration defines that there is at least one PSFCH resource associated with each of the NR subchannels can be used as well, e.g., as illustrated by the example of Fig. 8.

In the example of Fig. 8, the LTE resource pool consists of $L_{subch,LTE}$ = 4 LTE subchannels, denoted by LTE-1, LTE-2, LTE-3, and LTE-4. The NR resource pool consists of $L_{subch,NR}$ = 3 NR subchannels, denoted by NR-1, NR-2, and NR-3, and PSFCH resources 50. The PSFCH resources 50 are denoted by indices 1, 2, 3 which indicate the NR subchannel they are associated with, i.e., the PSFCH resources 50 with index 1 are associated with NR subchannel NR-1, the PSFCH resources 50 with index 2 are associated with NR subchannel NR-2, and the PSFCH resources 50 with index 3 are associated with NR subchannel NR-3. As can be seem, in the frequency resources corresponding to each of the LTE subchannels, the NR SL resource pool configuration defines that there is at least one PSFCH resource associated with each of the NR subchannels. Specifically, in the frequency resources of LTE-1, there is a PSFCH resource 50 associated with NR-1, a PSFCH resource 50 associated with NR-2, and a PSFCH resource 50 associated with NR-3. Similarly, in the frequency resources of each of LTE-2, LTE-3, and LTE-4, there is a PSFCH resource 50 associated with NR-1, a PSFCH resource 50 associated with NR-2, and a PSFCH resource 50 associated with NR-3. As compared to the example of Fig. 7, in the example of Fig. 8 the number of the LTE subchannels and the number of the NR subchannels are different, and the number of PRBs per subchannel differs between the LTE subchannels and the NR subchannels. From the example of Fig. 8, it can also be seen that even though the PSFCH resources 50 appear to be irregularly distributed over the NR subchannels, the distribution of the PSFCH resources is even from the perspective of the LTE subchannels.

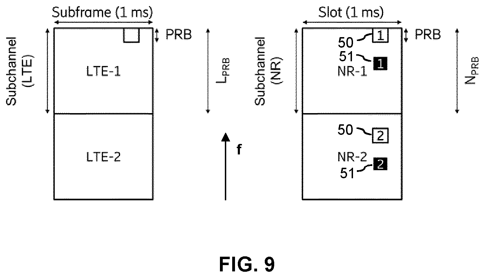

In the example of Fig. 9, the LTE resource pool consists of $L_{subch,LTE}$ = 2 LTE subchannels, denoted by LTE-1 and LTE-2. The NR resource pool consists of $L_{subch,NR}$ = 2 NR subchannels, denoted by NR-1 and NR-2, and PSFCH resources 50, 51. The PSFCH resources 50, 51 are denoted by indices 1, 2 which indicate the NR subchannel they are associated with, i.e., the PSFCH resources 50, 51 with index 1 are associated with NR subchannel NR-1, and the PSFCH resources 50, 51 with index 2 are associated with NR subchannel NR-2. In this example, the PSFCH resources include different types of PSFCH resources: PSFCH resources 50 for transmission of HARQ acknowledgement information and PSFCH resources 51 for transmission of other feedback, such as conflict information. As can be seen, for each of the LTE subchannels, there is at least one of the NR subchannels that has at least one PSFCH resource 50, 51 of each type frequency resources that overlap with the frequency resources of the LTE subchannel.

In the above examples, the dependency of the LTE SL configuration and the NR SL configuration required that for each LTE subchannel there is at least one PSFCH resource, optionally of a certain type and/or one associated with each of the NR subchannels, in frequency resources that overlap the LTE subchannel. The requirement can however also require a higher number of PSFCH resources in frequency resources that overlap the LTE subchannel, optionally for each type of PSFCH resource and/or associated with each of the NR channels. In some cases the required number of PSFCH resources can be set in terms of a fixed number. Alternatively, the required number of PSFCH resources can be set in terms of a minimum limit. In some scenarios, the number of PSFCH resources per LTE subchannel can also be set depending on probability of using the PSFCH resources. For example, if a first PSFCH resource has a probability of 1/4 of being used and a second and third PSFCH resources have 1/8 probability of being used, then the first PSFCH resource may be configured to overlap with a first LTE subchannel and the second and third resources may be configured to overlap with a second LTE subchannel. In this way, the probability of interfering either of the sub-channels is the same.

It should be noted that in the above examples the distribution of the NR PSFCH resources 50, 51 is done with respect to the LTE subchannels, and not with respect to the NR subchannels. In this way, RSSI measurements performed by LTE UEs are able to detect the presence of PSFCH transmissions, if they occur. For example, an RSSI measurement performed by an LTE UE on any of the LTE sub-channels in Fig. 5 also covers a PSFCH resource. So, if a transmission on that PSFCH resource takes place, the LTE UE will sense the corresponding energy. In contrast, if the PSFCH resources would all be configured in the first subchannel (LTE-1), e.g., with the aim of less fragmentation of frequency resources, only RSSI measurements on the first subchannel can reflect the presence of NR PSFCH transmissions. This is not desirable, as based on the sensing, LTE UEs would not exclude the corresponding time-domain resources on other subchannels, even though NR PSFCH transmissions on one subchannel may adversely affect PSCCH and/or PSSCH transmissions on another subchannel.

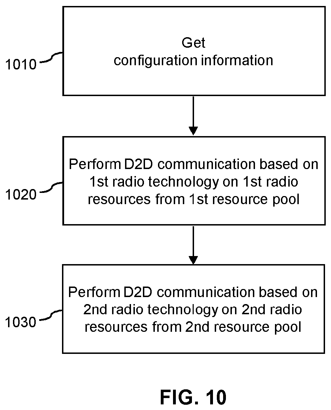

Fig. 10 shows a flowchart for illustrating a method, which may be utilized for implementing the illustrated concepts. The method of Fig. 10 may be used for implementing the illustrated concepts in a D2D communication device, e.g., corresponding to any of the above-mentioned D2D communication devices 10. In some scenarios, the D2D communication device may be a vehicle or vehicle-mounted device, but other types of WD, e.g., as mentioned above, could be used as well.

If a processor-based implementation of the D2D communication device is used, at least some of the steps of the method of Fig. 10 may be performed and/or controlled by one or more processors of the D2D communication device. Such D2D communication device may also include a memory storing program code for implementing at least some of the below described functionalities or steps of the method of Fig. 10.

At step 1010, the D2D communication device may get configuration information. The configuration information may have the purpose of configuring the D2D communication device with respect to D2D communication. The configuration information may for example define configuration of one or more resource pools. In some scenarios, the D2D communication may receive at least a part of the configuration information from a node of the wireless communication network, e.g., the access node 100 or a CN node. In such cases, the configuration information could for example be conveyed by RRC signaling and/or broadcasted system information, e.g., in an MIB and/or SIB. Further, the D2D communication may receive at least a part of the configuration information from some other source, e.g., an apparatus used by a manufacturer or distributor to configure D2D communication devices. Further, at least a part of the configuration information could be pre-configured in the D2D communication device.

At step 1020, the D2D communication device performs D2D communication based on a first radio technology, e.g., the LTE SL technology. The D2D communication device performs the D2D communication on first radio resources from a first resource pool including a first set of frequency subchannels. Selection of the first radio resources from the first resource pool is based on sensing the frequency subchannels of the first set to detect transmissions by other devices, e.g., based on RSSI measurements per subchannel. The first radio technology may for example correspond to the LTE SL technology using Mode 4 resource selection. The first resource pool may for example be configured based on the configuration information of step 1010.

At step 1030, the D2D communication device performs D2D communication based on a second radio technology, e.g., the NR SL technology. The D2D communication device performs the D2D communication on second radio resources from a second resource pool including a second set of frequency subchannels that at least in part overlaps with the first set of frequency subchannels. The D2D communication based on the second radio technology involves transmission of at least one control signal. Frequency resources for transmission of the at least one control signal are distributed in frequency depending on the first set of frequency subchannels, such that each frequency subchannel of the first set includes at least one frequency resource for transmission of the at least one control signal.

The D2D communication based on the second radio technology can be performed in slots defined in the time domain, with each of the slots consisting of a number of modulation symbols, such as illustrated in Figs. 2A and 2B. In this case, the at least one control signal may be transmitted in only a subset of the modulation symbols of the slot, e.g., as illustrated in Fig. 2B.

The at least one control signal may convey feedback information indicating reception success of one or more D2D transmissions, e.g., HARQ acknowledgement information. Alternatively or in addition, the at least one control signal may convey conflict information indicating one or more resource conflicts in the second resource pool. If the second radio technology corresponds to the NR SL, technology, the control signal may correspond to an PSFCH. In addition or as an alternative, the at least one control signal may include a reference signal, e.g., a reference signal for positioning or a reference signal for acquiring channel state information (CSI).

In some scenarios, the number of the frequency subchannels of the first set and the number of the frequency subchannels of the second set are the same, e.g., like illustrated in the examples of Figs. 5, 7, and 9. Alternatively, the number of the frequency subchannels of the first set and the number of the frequency subchannels of the second set are different, e.g., like illustrated in the examples of Figs. 6 and 8.

In some scenarios, the frequency subchannels of the first set have a first width in frequency domain and the number of the frequency subchannels of the second set have a second width in frequency domain which is the same as the first width, e.g., like illustrated in the examples of Figs. 5, 7, and 9. Alternatively, the first width and the second width can be different, e.g., like illustrated in the examples of Figs. 6 and 8.

In some scenarios, the distribution of the frequency resources for transmission of the at least one control signal may be based on configuring a number of the frequency resources per frequency subchannel of the first set. Further, the distribution of the frequency resources for transmission of the at least one control signal can be based on configuring a minimum number of the frequency resources per frequency subchannel of the first set.

In some scenarios, the at least one control signal may include different types of control signals, e.g., a control signal for conveying feedback information like HARQ acknowledgement information, a control signal for conveying conflict information, and/or one or more types of reference signal, e.g., a positioning reference signal or a reference signal for acquiring CSI. The frequency resources for transmission of at least one control signal of the second radio technology may then be distributed such that each frequency subchannel of the first set includes at least one frequency resource for each type, e.g., at least one frequency resource for transmission of feedback information and at least one frequency resource for transmission of conflict information.

In some scenarios, the same number of the frequency resources for transmission of the at least one control signal is included in each of the frequency subchannels of the first set. Alternatively, the number of the frequency resources for transmission of the at least one control signal that is included in each of the frequency subchannels of the first set could vary between the frequency subchannels of the first set, e.g., depending on probability of usage of the frequency resources. Accordingly, in some scenarios the distribution of the frequency resources for transmission of the at least one control signal can be based on a probability of usage of the frequency resources, e.g., in such a way that the number of the frequency resources for transmission of the at least one control signal per frequency subchannel of the first set decreases with increasing probability of usage of the frequency resources.

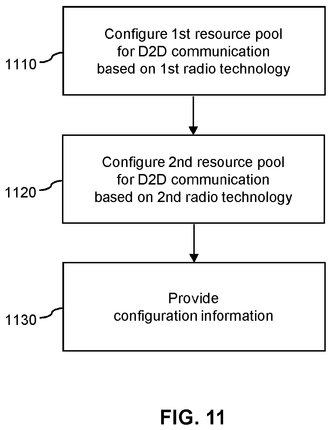

Fig. 11 shows a flowchart for illustrating a method, which may be utilized for implementing the illustrated concepts. The method of Fig. 11 may be used for implementing the illustrated concepts in an apparatus for configuration of D2D communication. Such apparatus may correspond to a node of the wireless communication network, e.g., corresponding to the above-mentioned access node 100 or a node of the CN 210, or a distributed function implemented by multiple nodes of the wireless communication network. Alternatively, such apparatus could be a dedicated configuration or programming system deployed by a manufacturer or distributor of D2D communication devices.

If a processor-based implementation of the apparatus is used, at least some of the steps of the method of Fig. 11 may be performed and/or controlled by one or more processors of the apparatus. Such node may also include a memory storing program code for implementing at least some of the below described functionalities or steps of the method of Fig. 11.

At step 1110, at least one D2D communication device, e.g., at least one of the above-mentioned D2D communication devices 10, is configured with a first resource pool for selection of first radio resources for D2D communication based on a first radio technology, e.g., the LTE SL technology. The first resource pool includes a first set of frequency subchannels. Selection of the first radio resources from the first resource pool is based on sensing the frequency subchannels of the first set to detect transmissions by other devices, e.g., based on RSSI measurements per subchannel. The first radio technology may for example correspond to the LTE SL technology using Mode 4 resource selection.

At step 1120, the at least one D2D communication device is configured with a second resource pool for selection of second radio resources for D2D communication based on a second radio technology. The second resource pool includes a second set of frequency subchannels that at least in part overlaps with the first set of frequency subchannels. The D2D communication based on the second radio technology involves transmission of at least one control signal. Frequency resources for transmission of the at least one control signal are distributed in frequency depending on the first set of frequency subchannels, such that each frequency subchannel of the first set includes at least one frequency resource for transmission of the at least one control signal.

The first resource pool and the second resource pool may be configured in the same D2D communication device, e.g., in a D2D communication device that supports both the first radio technology and the second radio technology. However, it would also be possible to configure the first resource pool in one or more D2D communication devices supporting the first radio technology and to configure the second resource pool in one or more D2D communication devices supporting the second radio technology.

The D2D communication based on the second radio technology can be organized in slots defined in the time domain, with each of the slots consisting of a number of modulation symbols, such as illustrated in Figs. 2A and 2B. In this case, the at least one control signal may be transmitted in only a subset of the modulation symbols of the slot, e.g., as illustrated in Fig. 2B.

The at least one control signal may convey feedback information indicating reception success of one or more D2D transmissions, e.g., HARQ acknowledgement information. Alternatively or in addition, the at least one control signal may convey conflict information indicating one or more resource conflicts in the second resource pool. If the second radio technology corresponds to the NR SL, technology, the control signal may correspond to an PSFCH. In addition or as an alternative, the at least one control signal may include a reference signal, e.g., a reference signal for positioning or a reference signal for acquiring CSI.

In some scenarios, the number of the frequency subchannels of the first set and the number of the frequency subchannels of the second set are the same, e.g., like illustrated in the examples of Figs. 5, 7, and 9. Alternatively, the number of the frequency subchannels of the first set and the number of the frequency subchannels of the second set are different, e.g., like illustrated in the examples of Figs. 6 and 8.

In some scenarios, the frequency subchannels of the first set have a first width in frequency domain and the number of the frequency subchannels of the second set have a second width in frequency domain which is the same as the first width, e.g., like illustrated in the examples of Figs. 5, 7, and 9. Alternatively, the first width and the second width can be different, e.g., like illustrated in the examples of Figs. 6 and 8.

In some scenarios, the distribution of the frequency resources for transmission of the at least one control signal may be based on configuring a number of the frequency resources per frequency subchannel of the first set. Further, the distribution of the frequency resources for transmission of the at least one control signal can be based on configuring a minimum number of the frequency resources per frequency subchannel of the first set.

In some scenarios, the at least one control signal may include different types of control signals, e.g., a control signal for conveying feedback information like HARQ acknowledgement information, a control signal for conveying conflict information, and/or one or more types of reference signal, e.g., a positioning reference signal or a reference signal for acquiring CSI. The frequency resources for transmission of at least one control signal of the second radio technology may then be distributed such that each frequency subchannel of the first set includes at least one frequency resource for each type, e.g., at least one frequency resource for transmission of feedback information and at least one frequency resource for transmission of conflict information.

In some scenarios, the same number of the frequency resources for transmission of the at least one control signal is included in each of the frequency subchannels of the first set. Alternatively, the number of the frequency resources for transmission of the at least one control signal that is included in each of the frequency subchannels of the first set could vary between the frequency subchannels of the first set, e.g., depending on probability of usage of the frequency resources. Accordingly, in some scenarios the distribution of the frequency resources for transmission of the at least one control signal can be based on a probability of usage of the frequency resources, e.g., in such a way that the number of the frequency resources for transmission of the at least one control signal per frequency subchannel of the first set decreases with increasing probability of usage of the frequency resources.

At step 1130, configuration information may be provided to the at least one D2D communication device. The configuration information may have the purpose of configuring the at least one D2D communication device with respect to D2D communication. The configuration information may for example define configuration of the first resource pool and/or the second resource pool, specifically the distribution of the frequency resources for transmission of the at least one control signal.

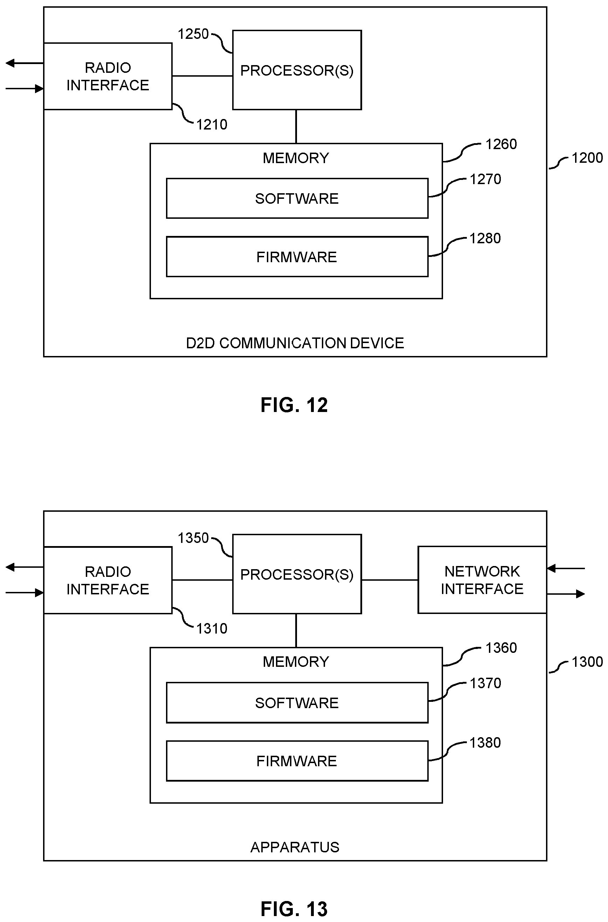

Fig. 12 illustrates a processor-based implementation of a D2D communication device 1200 which may be used for implementing the above-described concepts. For example, the structures as illustrated in Fig. 12 may be used for implementing the concepts in any of the above-mentioned D2D communication devices 10.

As illustrated, the D2D communication device 1200 includes one or more radio interfaces 1210. The radio interface(s) 1210 may for example be based on the NR technology or the LTE technology. However, other radio technologies, such as WLAN or Bluetooth, could be used as well. The radio interface(s) 1210 may support D2D communication based on different radio technologies, e.g., using LTE SL and NR SL.

Further, the D2D communication device 1200 may include one or more processors 1250 coupled to the radio interface(s) 1210 and a memory 1260 coupled to the processor(s) 1250. By way of example, the radio interface(s) 1210, the processor(s) 1250, and the memory 1260 could be coupled by one or more internal bus systems of the D2D communication device 1200. The memory 1260 may include a Read-Only-Memory (ROM), e.g., a flash ROM, a Random Access Memory (RAM), e.g., a Dynamic RAM (DRAM) or Static RAM (SRAM), a mass storage, e.g., a hard disk or solid state disk, or the like. As illustrated, the memory 1260 may include software 1270 and/or firmware 1280. The memory 1260 may include suitably configured program code to be executed by the processor(s) 1250 so as to implement the above-described functionalities for controlling D2D communication, such as explained in connection with Fig. 10.

It is to be understood that the structures as illustrated in Fig. 12 are merely schematic and that the D2D communication device 1200 may actually include further components which, for the sake of clarity, have not been illustrated, e.g., an internal clock, further interfaces or further processors. Also, it is to be understood that the memory 1260 may include further program code for implementing known functionalities of a UE. According to some embodiments, also a computer program may be provided for implementing functionalities of the wireless communication device 1200, e.g., in the form of a physical medium storing the program code and/or other data to be stored in the memory 1260 or by making the program code available for download or by streaming.

Fig. 13 illustrates a processor-based implementation of an apparatus 1300 for configuring D2D communication. In some scenarios, the apparatus may correspond to a node of a wireless communication network, such as the above-mentioned an access node or a CN node. For example, the structures as illustrated in Fig. 13 may be used for implementing the concepts in the above-mentioned access node 100 or a node of the CN 210. Alternatively, the apparatus 1300 could be a dedicated configuration or programming system deployed by a manufacturer or distributor of D2D communication devices.

As illustrated, the apparatus 1300 may include one or more radio interfaces 1310. The radio interface(s) 1310 may for example be based on the NR technology or the LTE technology. The radio interface(s) 1310 may be used for controlling or configuring wireless communication devices, such as any of the above-mentioned D2D communication devices 10. In addition, the apparatus 1300 may include one or more network interfaces 1320. The network interface(s) 1320 may for example be used for communication with one or more other nodes in a wireless communication network.

Further, the apparatus 1300 may include one or more processors 1350 coupled to the interface(s) 1310, 1320 and a memory 1360 coupled to the processor(s) 1350. By way of example, the interface(s) 1310, the processor(s) 1350, and the memory 1360 could be coupled by one or more internal bus systems of the apparatus 1300. The memory 1360 may include a ROM, e.g., a flash ROM, a RAM, e.g., a DRAM or SRAM, a mass storage, e.g., a hard disk or solid state disk, or the like. As illustrated, the memory 1360 may include software 1370 and/or firmware 1380. The memory 1360 may include suitably configured program code to be executed by the processor(s) 1350 so as to implement the above-described functionalities for controlling D2D communication, such as explained in connection with Fig. 11.

It is to be understood that the structures as illustrated in Fig. 13 are merely schematic and that the apparatus 1300 may actually include further components which, for the sake of clarity, have not been illustrated, e.g., further interfaces, such as a dedicated configuration interface, or further processors. Also, it is to be understood that the memory 1360 may include further program code for implementing known functionalities of an eNB, gNB, or similar access node, or of a CN node. According to some embodiments, also a computer program may be provided for implementing functionalities of the apparatus 1300, e.g., in the form of a physical medium storing the program code and/or other data to be stored in the memory 1360 or by making the program code available for download or by streaming.

As can be seen, the concepts as described above may be used for improving coexistence of different radio technologies for D2D communication, such as LTE SL and NR SL. By distributing the PSFCH resources over the different LTE subchannels, the following benefits can be attained: For LTE subframes that overlap with NR slots configured with PSFCH resources, on average the RSSI measurements on per LTE subchannel also detect impacted by PSFCH transmissions by NR UEs. Accordingly, it can be avoided that some LTE sub-channels have an RSSI measurement that reflects the interference of PSFCH transmissions and some LTE subchannels do not. As a result, the existing sensing procedure will exclude all resources in LTE subframes that overlap with NR slots configured with PSFCH resources that are being utilized. The chances that an LTE TX UE utilizes an LTE subframe which overlaps with an NR slot with utilized PSFCH resources are reduced. This in turn improves the reliability of LTE SL communication. Further, it can be achieved that, for LTE subframes that overlap with NR slots configured with PSFCH resources, on average the same level of interference is experienced on each LTE subchannel.

It is to be understood that the examples and embodiments as explained above are merely illustrative and susceptible to various modifications. For example, the illustrated concepts may be applied in connection with various kinds of radio technologies and D2D communication, without limitation the SL mode of the LTE technology or NR technology, e.g., in connection with WLAN technologies or other wireless ad-hoc network technologies. Further, the concepts may be applied with respect to various types of D2D communication devices. Moreover, it is to be understood that the above concepts may be implemented by using correspondingly designed software to be executed by one or more processors of an existing device or apparatus, or by using dedicated device hardware. Further, it should be noted that the illustrated apparatuses or devices may each be implemented as a single device or as a system of multiple interacting devices or modules.

**Claims**

1. A method performed by a device-to-device, D2D, communication device (10; 1200), the method comprising:

   on first radio resources from a first resource pool comprising a first set of frequency subchannels, performing D2D communication based on a first radio technology, wherein selection of the first radio resources from the first resource pool is based on sensing the frequency subchannels of the first set to detect transmissions by other devices;
   on second radio resources from a second resource pool comprising a second set of frequency subchannels, performing D2D communication based on a second radio technology, wherein
   the D2D communication based on the second radio technology comprises transmission of at least one control signal, and wherein the second set of frequency subchannels at least in part overlaps with the first set of frequency subchannels,
   **characterized in that**:

frequency resources (50, 51) for transmission of the at least one control signal are distributed in frequency depending on the first set of frequency subchannels, such that each frequency subchannel of the first set includes at least one frequency resource (50, 51) for transmission of the at least one control signal.

2. The method according to claim 1,

wherein the D2D communication based on the second radio technology is performed in slots defined in the time domain, with each of the slots consisting of a number of modulation symbols, and
wherein the at least one control signal is transmitted in only a subset of the modulation symbols of the slot.

3. The method according to claim 1 or 2,
wherein the at least one control signal conveys feedback information indicating reception success of one or more D2D transmissions.

4. The method according to any one of the preceding claims,
wherein the at least one control signal conveys conflict information indicating one or more resource conflicts in the second resource pool.

5. The method according to any one of the preceding claims,
wherein the at least one control signal comprises a reference signal.

6. The method according to any one of the preceding claims,
wherein the number of the frequency subchannels of the first set and the number of the frequency subchannels of the second set are the same or different.

7. The method according to any one of the preceding claims,
wherein the frequency subchannels of the first set have a first width in frequency domain and the frequency subchannels of the second set have a second width in frequency domain which is the same as the first width or different from the first width.

8. The method according to any one of the preceding claims,
wherein the distribution of the frequency resources (50, 51) for transmission of the at least one control signal is based on configuring a number or minimum number of the frequency resources (50, 51) per frequency subchannel of the first set.

9. The method according to any one of the preceding claims,
wherein the same number of the frequency resources (50, 51) for transmission of the at least one control signal is included in each of the frequency subchannels of the first set.

10. The method according to any one of the preceding claims,
wherein the frequency resources (50, 51) for transmission of at least one control signal of the second radio technology are distributed such that each frequency subchannel of the first set includes at least one frequency resource (50) for transmission of feedback information and at least one frequency resource (51) for transmission of conflict information.

11. The method according to any one of the preceding claims,
wherein the distribution of the frequency resources (50, 51) for transmission of the at least one control signal is based on a probability of usage of the frequency resources (50, 51).

12. The method according to claim 11,
wherein the number of the frequency resources (50, 51) for transmission of the at least one control signal per frequency subchannel of the first set decreases with increasing probability of usage of the frequency resources (50, 51).

13. A method of controlling device-to-device, D2D, communication, the method is performed by an apparatus (100; 1300) for configuring D2D communication and comprising:

configuring at least one D2D communication device (10; 1200) with a first resource pool for selection of first radio resources for D2D communication based on a first radio technology and a second resource pool for selection of second radio resources for D2D communication based on a second radio technology,

wherein the first resource pool comprises a first set of frequency subchannels and the second resource pool comprises a second set of frequency subchannels that at least in part overlaps with the first set of frequency subchannels,

wherein selection of the first radio resources from the first resource pool is based on sensing the frequency subchannels of the first set to detect transmissions by other devices, and

**characterized in that**:

frequency resources (50, 51) for transmission of at least one control signal of the second radio technology are distributed in frequency depending on the first set of frequency subchannels, such that each frequency subchannel of the first set includes at least one frequency resource (50, 51) for transmission of the at least one control signal.

**14.** A D2D communication device (10; 1200), the D2D communication device (10; 1200) being adapted to:

- on first radio resources from a first resource pool comprising a first set of frequency subchannels, perform D2D communication based on a first radio technology, wherein selection of the first radio resources from the first resource pool is based on sensing the frequency subchannels of the first set to detect transmissions by other devices;

- on second radio resources from a second resource pool comprising a second set of frequency subchannels, perform D2D communication based on a second radio technology, wherein the D2D communication based on the second radio technology comprises transmission of at least one control signal, and wherein the second set of frequency subchannels at least in part overlaps with the first set of frequency subchannels,

**characterized in that**:

frequency resources for transmission of the at least one control signal are distributed in frequency depending on the first set of frequency subchannels, such that each frequency subchannel of the first set includes at least one frequency resource for transmission of the at least one control signal.

**15.** An apparatus (100; 1300) for configuring D2D communication, the apparatus (100; 1300) being adapted to:

- configure at least one D2D communication device (10; 1200) with a first resource pool for selection of first radio resources for D2D communication based on a first radio technology and a second resource pool for selection of second radio resources for D2D communication based on a second radio technology,

wherein the first resource pool includes a first set of frequency subchannels and the second resource pool includes a second set of frequency subchannels that at least in part overlaps with the first set of frequency subchannels,

wherein selection of the first radio resources from the first resource pool is based on sensing the frequency subchannels of the first set to detect transmissions by other devices, and

**characterized in that**:

frequency resources (50, 51) for transmission of at least one control signal of the second radio technology are distributed in frequency depending on the first set of frequency subchannels, such that each frequency subchannel of the first set includes at least one frequency resource (50, 51) for transmission of the at least one control signal.

**Patentansprüche**

**1.** Verfahren, das von einer Vorrichtung (10; 1200) für Vorrichtung-zu-Vorrichtung-Kommunikation, D2D-Kommunikation, durchgeführt wird, wobei das Verfahren Folgendes umfasst:

auf ersten Funkressourcen aus einem ersten Ressourcenpool, der einen ersten Satz von Frequenz-Unterkanälen umfasst, Durchführen von D2D-Kommunikation basierend auf einer ersten Funktechnologie, wobei die Auswahl der ersten Funkressourcen aus dem ersten Ressourcenpool auf einem Abtasten der Frequenz-Unterkanäle des ersten Satzes zum Erkennen von Übertragungen durch andere Vorrichtungen basiert;

auf zweiten Funkressourcen aus einem zweiten Ressourcenpool, der einen zweiten Satz von Frequenz-Unterkanälen umfasst, Durchführen von D2D-Kommunikation basierend auf einer zweiten Funktechnologie, wobei die D2D-Kommunikation, die auf der zweiten Funktechnologie basiert, Übertragung mindestens eines Steuersignals umfasst und wobei der zweite Satz von Frequenz-Unterkanälen sich zumindest teilweise mit dem ersten Satz von Frequenz-Unterkanälen überlappt,
**dadurch gekennzeichnet, dass**:
Frequenzressourcen (50, 51) zur Übertragung des mindestens einen Steuersignals in Abhängigkeit von dem ersten Satz von Frequenz-Unterkanälen frequenzmäßig derart verteilt werden, dass jeder Frequenz-Unterkanal des ersten Satzes mindestens eine Frequenzressource (50, 51) zur Übertragung des mindestens einen Steuersignals umfasst.

2. Verfahren nach Anspruch 1,

   wobei die D2D-Kommunikation, die auf der zweiten Funktechnologie basiert, in Schlitzen durchgeführt wird, die in der Zeitdomäne definiert sind, wobei jeder der Schlitze aus einer Anzahl von Modulationssymbolen besteht, und
   wobei das mindestens eine Steuersignal nur in einer Teilmenge der Modulationssymbole des Schlitzes gesendet wird.

3. Verfahren nach Anspruch 1 oder 2,
   wobei das mindestens eine Steuersignal Rückmeldungsinformationen befördert, die einen Empfangserfolg einer oder mehrerer D2D-Übertragungen angeben.

4. Verfahren nach einem der vorhergehenden Ansprüche,
   wobei das mindestens eine Steuersignal Konfliktinformationen befördert, die einen oder mehrere Ressourcenkonflikte im zweiten Ressourcenpool angeben.

5. Verfahren nach einem der vorhergehenden Ansprüche,
   wobei das mindestens eine Steuersignal ein Referenzsignal umfasst.

6. Verfahren nach einem der vorhergehenden Ansprüche,
   wobei die Anzahl der Frequenz-Unterkanäle des ersten Satzes und die Anzahl der Frequenz-Unterkanäle des zweiten Satzes gleich oder verschieden sind.

7. Verfahren nach einem der vorhergehenden Ansprüche,
   wobei die Frequenz-Unterkanäle des ersten Satzes eine erste Breite in der Frequenzdomäne aufweisen und die Frequenz-Unterkanäle des zweiten Satzes eine zweite Breite in der Frequenzdomäne aufweisen, die gleich wie die erste Breite oder verschieden von der ersten Breite ist.

8. Verfahren nach einem der vorhergehenden Ansprüche,
   wobei die Verteilung der Frequenzressourcen (50, 51) zur Übertragung des mindestens einen Steuersignals auf einem Konfigurieren einer Anzahl oder einer Mindestanzahl der Frequenzressourcen (50, 51) pro Frequenz-Unterkanal des ersten Satzes basiert.

9. Verfahren nach einem der vorhergehenden Ansprüche,
   wobei in jedem der Frequenz-Unterkanäle des ersten Satzes die gleiche Anzahl der Frequenzressourcen (50, 51) zur Übertragung des mindestens einen Steuersignals umfasst ist.

10. Verfahren nach einem der vorhergehenden Ansprüche,
    wobei die Frequenzressourcen (50, 51) zur Übertragung des mindestens einen Steuersignals der zweiten Funktechnologie derart verteilt werden, dass jeder Frequenz-Unterkanal des ersten Satzes mindestens eine Frequenzressource (50) zur Übertragung von Rückmeldungsinformationen und mindestens eine Frequenzressource (51) zur Übertragung von Konfliktinformationen umfasst.

11. Verfahren nach einem der vorhergehenden Ansprüche,
    wobei die Verteilung der Frequenzressourcen (50, 51) zur Übertragung des mindestens einen Steuersignals auf einer Wahrscheinlichkeit der Nutzung der Frequenzressourcen (50, 51) basiert.

12. Verfahren nach Anspruch 11,
    wobei die Anzahl der Frequenzressourcen (50, 51) zur Übertragung des mindestens einen Steuersignals pro Frequenz-Unterkanal des ersten Satzes mit zunehmender Wahrscheinlichkeit der Nutzung der Frequenzressourcen (50, 51) abnimmt.

13. Verfahren zur Steuerung von Vorichtung-zu-Vorrichtung-Kommunikation, D2D-Kommunikation, wobei das Verfahren von einer Einrichtung (100; 1300) zum Konfigurieren von D2D-Kommunikation durchgeführt wird und Folgendes umfasst:

Konfigurieren mindestens einer D2D-Kommunikationsvorrichtung (10; 1200) mit einem ersten Ressourcenpool zur Auswahl von ersten Funkressourcen zur D2D-Kommunikation basierend auf einer ersten Funktechnologie und einem zweiten Ressourcenpool zur Auswahl von zweiten Funkressourcen zur D2D-Kommunikation basierend auf einer zweiten Funktechnologie,
wobei der erste Ressourcenpool einen ersten Satz von Frequenz-Unterkanälen umfasst und der zweite Ressourcenpool einen zweiten Satz von Frequenz-Unterkanälen umfasst, der sich zumindest teilweise mit dem ersten Satz von Frequenz-Unterkanälen überlappt,
wobei die Auswahl der ersten Funkressourcen aus dem ersten Ressourcenpool auf einem Abtasten der Frequenz-Unterkanäle des ersten Satzes zum Erkennen von Übertragungen durch andere Vorrichtungen basiert, und **dadurch gekennzeichnet, dass**
Frequenzressourcen (50, 51) zur Übertragung mindestens eines Steuersignals der zweiten Funktechnologie in Abhängigkeit von dem ersten Satz von Frequenz-Unterkanälen frequenzmäßig derart verteilt werden, dass jeder Frequenz-Unterkanal des ersten Satzes mindestens eine Frequenzressource (50, 51) zur Übertragung des mindestens einen Steuersignals umfasst.

14. D2D-Kommunikationsvorrichtung (10, 1200), wobei die D2D-Kommunikationsvorrichtung (10, 1200) zu Folgendem ausgelegt ist:

- auf ersten Funkressourcen aus einem ersten Ressourcenpool, der einen ersten Satz von Frequenz-Unterkanälen umfasst, Durchführen von D2D-Kommunikation basierend auf einer ersten Funktechnologie, wobei die Auswahl der ersten Funkressourcen aus dem ersten Ressourcenpool auf einem Abtasten der Frequenz-Unterkanäle des ersten Satzes zum Erkennen von Übertragungen durch andere Vorrichtungen basiert;
- auf zweiten Funkressourcen aus einem zweiten Ressourcenpool, der einen zweiten Satz von Frequenz-Unterkanälen umfasst, Durchführen von D2D-Kommunikation basierend auf einer zweiten Funktechnologie, wobei die D2D-Kommunikation, die auf der zweiten Funktechnologie basiert, Übertragung mindestens eines Steuersignals umfasst, und wobei der zweite Satz von Frequenz-Unterkanälen sich zumindest teilweise mit dem ersten Satz von Frequenz-Unterkanälen überlappt,

**dadurch gekennzeichnet, dass**:
Frequenzressourcen zur Übertragung des mindestens einen Steuersignals in Abhängigkeit von dem ersten Satz von Frequenz-Unterkanälen frequenzmäßig derart verteilt werden, dass jeder Frequenz-Unterkanal des ersten Satzes mindestens eine Frequenzressource zur Übertragung des mindestens einen Steuersignals umfasst.

15. Einrichtung (100; 1300) zum Konfigurieren von D2D-Kommunikation, wobei die Einrichtung (100; 1300) zu Folgendem ausgelegt ist:

- Konfigurieren mindestens einer D2D-Kommunikationsvorrichtung (10; 1200) mit einem ersten Ressourcenpool zur Auswahl von ersten Funkressourcen zur D2D-Kommunikation basierend auf einer ersten Funktechnologie und einem zweiten Ressourcenpool zur Auswahl von zweiten Funkressourcen zur D2D-Kommunikation basierend auf einer zweiten Funktechnologie,
wobei der erste Ressourcenpool einen ersten Satz von Frequenz-Unterkanälen umfasst und der zweite Ressourcenpool einen zweiten Satz von Frequenz-Unterkanälen umfasst, der sich zumindest teilweise mit dem ersten Satz von Frequenz-Unterkanälen überlappt,
wobei die Auswahl der ersten Funkressourcen aus dem ersten Ressourcenpool auf einem Abtasten der Frequenz-Unterkanäle des ersten Satzes zum Erkennen von Übertragungen durch andere Vorrichtungen basiert, und

**dadurch gekennzeichnet, dass**:
Frequenzressourcen (50, 51) zur Übertragung mindestens eines Steuersignals der zweiten Funktechnologie in Abhängigkeit von dem ersten Satz von Frequenz-Unterkanälen frequenzmäßig derart verteilt werden, dass jeder Frequenz-Unterkanal des ersten Satzes mindestens eine Frequenzressource (50, 51) zur Übertragung des mindestens einen Steuersignals umfasst.

**Revendications**

1. Procédé réalisé par un dispositif de communication de dispositif à dispositif, D2D (10 ; 1200), le procédé comprenant :

   sur des premières ressources radio parmi un groupe de premières ressources comprenant un premier ensemble de sous-canaux de fréquence, la réalisation d'une communication D2D sur la base d'une première technologie radio, dans lequel une sélection des premières ressources radio parmi le groupe de premières ressources est basée sur la détection des sous-canaux de fréquence du premier ensemble pour détecter des transmissions par d'autres dispositifs ;
   sur des deuxièmes ressources radio parmi un groupe de deuxièmes ressources comprenant un deuxième ensemble de sous-canaux de fréquence, la réalisation d'une communication D2D sur la base d'une deuxième technologie radio, dans lequel la communication D2D sur la base de la deuxième technologie radio comprend la transmission d'au moins un signal de commande, et dans lequel le deuxième ensemble de sous-canaux de fréquence chevauche au moins en partie le premier ensemble de sous-canaux de fréquence,
   **caractérisé en ce que** :
   des ressources de fréquence (50, 51) pour une transmission de l'au moins un signal de commande sont réparties en fréquence en fonction du premier ensemble de sous-canaux de fréquence, de sorte que chaque sous-canal de fréquence du premier ensemble inclut au moins une ressource de fréquence (50, 51) pour une transmission de l'au moins un signal de commande.

2. Procédé selon la revendication 1,

   dans lequel la communication D2D sur la base de la deuxième technologie radio est réalisée dans des créneaux définis dans le domaine temporel, chacun des créneaux se composant d'un nombre de symboles de modulation, et
   dans lequel l'au moins un signal de commande est transmis dans un seul sous-ensemble des symboles de modulation du créneau.

3. Procédé selon la revendication 1 ou 2, dans lequel l'au moins un signal de commande porte des informations de retour indiquant une réussite de réception d'une ou plusieurs transmissions D2D.

4. Procédé selon l'une quelconque des revendications précédentes, dans lequel au moins un signal de commande porte des informations de conflit indiquant un ou plusieurs conflits de ressources dans le groupe de deuxièmes ressources.

5. Procédé selon l'une quelconque des revendications précédentes, dans lequel l'au moins un signal de commande comprend un signal de référence.

6. Procédé selon l'une quelconque des revendications précédentes, dans lequel le nombre de sous-canaux de fréquence du premier ensemble et le nombre de sous-canaux de fréquence du deuxième ensemble sont identiques ou différents.

7. Procédé selon l'une quelconque des revendications précédentes, dans lequel les sous-canaux de fréquence du premier ensemble présentent une première largeur dans le domaine fréquentiel et les sous-canaux de fréquence du deuxième ensemble présentent une deuxième largeur dans le domaine fréquentiel qui est identique à la première largeur ou différente de la première largeur.

8. Procédé selon l'une quelconque des revendications précédentes, dans lequel la répartition des ressources de fréquence (50, 51) pour une transmission de l'au moins un signal de commande est basée sur la configuration d'un nombre ou d'un nombre minimal des ressources de fréquence (50, 51) par sous-canal de fréquence du premier ensemble.

9. Procédé selon l'une quelconque des revendications précédentes, dans lequel le même nombre de ressources de fréquence (50, 51) pour une transmission de l'au moins un signal de commande est inclus dans chacun des sous-canaux de fréquence du premier ensemble.

10. Procédé selon l'une quelconque des revendications précédentes,

dans lequel les ressources de fréquence (50, 51) pour une transmission de l'au moins un signal de commande de la deuxième technologie radio sont réparties de sorte que chaque sous-canal de fréquence du premier ensemble inclut au moins une ressource de fréquence (50) pour une transmission d'informations de retour et au moins une ressource de fréquence (51) pour une transmission d'informations de conflit.

11. Procédé selon l'une quelconque des revendications précédentes,
dans lequel la répartition des ressources de fréquence (50, 51) pour une transmission de l'au moins un signal de commande est basée sur une probabilité d'utilisation des ressources de fréquence (50, 51).

12. Procédé selon la revendication 11,
dans lequel le nombre de ressources de fréquence (50, 51) pour une transmission de l'au moins un signal de commande par sous-canal de fréquence du premier ensemble diminue avec l'augmentation de la probabilité d'utilisation des ressources de fréquence (50, 51).

13. Procédé de commande de communication de dispositif à dispositif, D2D, le procédé étant réalisé par un appareil (100 ; 1300) pour configurer une communication D2D et comprenant :

la configuration d'au moins un dispositif de communication D2D (10 ; 1200) avec un groupe de premières ressources pour une sélection de premières ressources radio pour une communication D2D sur la base d'une première technologie radio, et un groupe de deuxièmes ressources pour une sélection de deuxièmes ressources radio pour une communication D2D sur la base d'une deuxième technologie radio,
dans lequel le groupe de premières ressources inclut un premier ensemble de sous-canaux de fréquence et le groupe de deuxièmes ressources inclut un deuxième ensemble de sous-canaux de fréquence qui chevauche au moins en partie le premier ensemble de sous-canaux de fréquence,
dans lequel une sélection des premières ressources radio parmi le groupe de premières ressources est basée sur la détection des sous-canaux de fréquence du premier ensemble pour détecter des transmissions par d'autres dispositifs, et
**caractérisé en ce que** :
des ressources de fréquence (50, 51) pour une transmission de l'au moins un signal de commande de la deuxième technologie radio sont réparties en fréquence en fonction du premier ensemble de sous-canaux de fréquence, de sorte que chaque sous-canal de fréquence du premier ensemble inclut au moins une ressource de fréquence (50, 51) pour une transmission de l'au moins un signal de commande.

14. Dispositif de communication D2D (10 ; 1200), le dispositif de communication D2D (10 ; 1200) étant adapté pour :

- sur des premières ressources radio parmi un groupe de premières ressources comprenant un premier ensemble de sous-canaux de fréquence, réaliser une communication D2D sur la base d'une première technologie radio, dans lequel une sélection des premières ressources radio parmi le groupe de premières ressources est basée sur la détection des sous-canaux de fréquence du premier ensemble pour détecter des transmissions par d'autres dispositifs ;
- sur des deuxièmes ressources radio parmi un groupe de deuxièmes ressources comprenant un deuxième ensemble de sous-canaux de fréquence, réaliser une communication D2D sur la base d'une deuxième technologie radio, dans lequel la communication D2D sur la base de la deuxième technologie radio comprend la transmission d'au moins un signal de commande, et dans lequel le deuxième ensemble de sous-canaux de fréquence chevauche au moins en partie le premier ensemble de sous-canaux de fréquence,

**caractérisé en ce que** :
des ressources de fréquence pour une transmission de l'au moins un signal de commande sont réparties en fréquence en fonction du premier ensemble de sous-canaux de fréquence, de sorte que chaque sous-canal de fréquence du premier ensemble inclut au moins une ressource de fréquence pour une transmission de l'au moins un signal de commande.

15. Appareil (100 ; 1300) de configuration de communication D2D, l'appareil (100 ; 1300) étant adapté pour :

- configurer au moins un dispositif de communication D2D (10 ; 1200) avec un groupe de premières ressources pour une sélection de premières ressources radio pour une communication D2D sur la base d'une première technologie radio, et un groupe de deuxièmes ressources pour une sélection de deuxièmes ressources radio pour une communication D2D sur la base d'une deuxième technologie radio,

dans lequel le groupe de premières ressources inclut un premier ensemble de sous-canaux de fréquence et le groupe de deuxièmes ressources inclut un deuxième ensemble de sous-canaux de fréquence qui chevauche au moins en partie le premier ensemble de sous-canaux de fréquence,

dans lequel une sélection des premières ressources radio parmi le groupe de premières ressources est basée sur la détection des sous-canaux de fréquence du premier ensemble pour détecter des transmissions par d'autres dispositifs, et

**caractérisé en ce que** :

des ressources de fréquence (50, 51) pour une transmission de l'au moins un signal de commande de la deuxième technologie radio sont réparties en fréquence en fonction du premier ensemble de sous-canaux de fréquence, de sorte que chaque sous-canal de fréquence du premier ensemble inclut au moins une ressource de fréquence (50, 51) pour une transmission de l'au moins un signal de commande.

OFDM Symbol

PSCCH and/or PSSCH | GP

subframe

**FIG. 1A**

Subframe (1 ms)

Subchannel (LTE)

PRB

$L_{PRB}$

**FIG. 1B**

$$S_{y_2}^0 = \frac{1}{K} \sum_{j=0}^{K-1} RSSI_{y_2 - j*P_{step}}^0$$

$$S_{y_1}^2 = \frac{1}{K} \sum_{j=0}^{K-1} RSSI_{y_1 - j*P_{step}}^2$$

FIG. 1C

**FIG. 2A**

**FIG. 2B**

**FIG. 3**

**FIG. 4**

**FIG. 5**

**FIG. 6**

FIG. 7

FIG. 8

**FIG. 9**

EP 4 595 635 B1

FIG. 10

30

FIG. 11

1250

RADIO INTERFACE

PROCESSOR(S)

1210

1200

MEMORY — 1260

SOFTWARE — 1270

FIRMWARE — 1280

D2D COMMUNICATION DEVICE

**FIG. 12**

1350

RADIO INTERFACE

PROCESSOR(S)

NETWORK INTERFACE

1310

1300

MEMORY — 1360

SOFTWARE — 1370

FIRMWARE — 1380

APPARATUS

**FIG. 13**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2022086700 A1

**Non-patent literature cited in the description**

- *3GPP TS 38.213 V17.3.0*, September 2022
- Discussion on Co-Channel Coexistence for LTE and NR Sidelink. *3GPP Draft R1-2204609*
- Discussion on co-channel coexistence for LTE side-link and NR sidelink. *3GPP Draft R1-2203463*
- Considerations on co-channel coexistence for LTE SL and NR SL. *3GPP Draft R1-2204585*